Europäisches Patentamt

European Patent Office

Office européen des brevets

(19)

(11) Publication number: **0 062 642**
**B1**

(12) **EUROPEAN PATENT SPECIFICATION**

(45) Date of publication of patent specification: **10.09.86**

(21) Application number: **81901796.3**

(22) Date of filing: **16.06.81**

(86) International application number:
**PCT/GB81/00104**

(87) International publication number:
**WO 82/00196 21.01.82 Gazette 82/03**

(51) Int. Cl.⁴: **G 01 B 11/26, G 01 B 11/00, G 01 S 17/46, G 02 B 26/10**

(54) MOVEMENT MEASURING APPARATUS AND LANDMARKS FOR USE THEREWITH.

(30) Priority: **27.06.80 GB 8021164**
**27.03.81 GB 8109747**

(43) Date of publication of application:
**20.10.82 Bulletin 82/42**

(45) Publication of the grant of the patent:
**10.09.86 Bulletin 86/37**

(84) Designated Contracting States:
**AT CH DE FR GB LI LU NL SE**

(56) References cited:
**DE-A-2 208 559**
**DE-A-2 628 543**
**FR-A-2 093 168**
**US-A-3 954 339**
**US-A-4 053 233**
**US-A-4 123 165**

**The file contains technical information
submitted after the application was filed and
not included in this specification**

(73) Proprietor: **MOVEMENT TECHNIQUES LIMITED**
**Unit 5 Loughborough Technology Centre Epinal
Way**
**Loughborough LE11 0QE (GB)**

(72) Inventor: **MITCHELSON, David Lloyd**
**17 South Street**
**Barrow Upon Soar Leicestershire LE12 8LY (GB)**

(74) Representative: **SERJEANTS**
**25, The Crescent King Street**
**Leicester, LE1 6RX (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Field of invention

The invention relates to movement measuring systems. The invention can be used for measuring, recording and monitoring human motion in for example biomechanics, bioengineering and the study of motor skills in physiological psychology. In such applications landmarks are affixed to physical elements whose movement is to be measured. The invention can be used also to record contours by affixing the landmark to a wand or probe and moving the landmark across the physical element whose shape is to be recorded. The invention could also be used to program and control robots and similar manipulative machines. The versatility of movement measuring apparatus of the invention may permit other applications.

Background of invention

The inventor has previously described a movement measuring apparatus referred to as CODA (see Mitchelson, D. L. 1975): Non-photographic techniques for movement analysis; in: Grieve, D. W. et al. Techniques for the analysis of human movement. Lepus, London; and Mitchelson, D. L. (1979); Bioengineering in motor function assessment and therapy; and in: Progress in Stroke Research, pp 117—124. Ed. Green halgh, R. M. Clifford Rose, F. Pitman Medical, London). In such apparatus landmarks were used in the form of LED's (light emitting diodes) which could be pulsed or modulated for distinguishing one landmark from another. Light impinging on multiple photodiode detector plates produced an analogue/digital signal indicative of the angular position of the LED landmark in the multiples photodiode observation field. The multiple photodiodes mounted on a plate were costly and the plate position had to be carefully calibrated to ensure reproducibility. The signal was a position-dependent signal and the accuracy of measurement obtainable was hence limited. The apparatus was costly and required skilled operatives.

There is also known a so-called SELSPOT system (made by Selective Electronic Company of Mölndal Sweden) using LED landmarks but a single multiple electrode photodiode producing an entirely analogue signal dependant on the horizontal and vertical position of the landmark in an observation field. Ambient light could influence measurements. Where 3-dimensional measurement is required separate measuring units have to be sited carefully in their appropriate relative positions. Again the apparatus was costly, difficult to use and liable to produce inaccurate or not reproducible results.

US—A—4,123,165 discloses a movement measuring system using a beam of radiation with different spectral components which is reflected by a rotating mirror (32) to scan an observation field containing a plurality of retro-reflecting landmarks (16), some of the landmarks filtering incident radiation differently from others, and using an arrangement responsive to the retro-reflection of different spectral components to produce a signal specific to the landmarks. The landmarks have filtering characteristics so that retro-reflection from different landmarks produces different spectral ranges. Sensors (48, 50) are exposed to different spectral parts of retro-reflected radiation to produce first signals supplied to an electronic conversion network (54A, 54B) to de-code the radiation by comparing said first signals so as to create a second landmark detect signal, and thereby determine the angular positions of the landmarks in the observation field. However the use of more than two lasers for detecting more than two different types of landmarks would be expensive and the light intensity associated with lasers could be damaging to the eye. The filtering characteristics of the landmarks 17 and 18 are narrow band pass filters of which only relatively few can be used side by side if spectral overlap is to be avoided. The sensors 48 and 50 are each individually responsible for detecting a single narrow band of retro-reflected radiation.

It is amongst the objects of the invention to provide a movement measurement apparatus which can improve on the aforementioned apparatus as regards safety, ability to distinguish between landmarks, manufacturing cost, ease of use, accuracy and/or reproducibility.

Summary of invention

According to the invention there is provided a movement measuring system using a beam of electromagnetic radiation with different spectral components which is reflected by a rotating mirror to scan an observation field containing a plurality of retro-reflecting landmarks, each of which filters incident radiation differently from the others, and using an arrangement responsive to the retro-reflection of different spectral components to produce a signal specific to the landmarks characterised in that the beam has a broad-band spectrum and the landmarks have filtering characteristics retro-reflecting a spectral range delimited by an edge where the filter transmission ratio changes over a narrow spectral range, the characteristics of the landmarks being differently delimited but having mutually overlapping spectral ranges and in that sensors are provided each receptive to a different spectral range which range is delimited by spectral ranges corresponding to the edges delimiting the spectral transmission of the landmarks and an electronic conversion network combining, in groups, the outputs of the respective sensors to provide a single signal specific for a particular one of the landmarks when that landmark retro-reflects the filtered broad-band radiation with the appropriate delimited spectral range onto the sensors to thereby determine the angular position of that particular landmark in the observation field by reference to the phase of mirror rotation at the time said single signal is provided.

2

When the landmark reflects back to the moving mirror a signal can be obtained related to the angular position of the landmark in the field. The system is basically a scanning system. Because only the phase of mirror movement needs to be determined, the electronic arrangement can be relatively simple. No wires need to be connected to subjects under examination.

The landmark may be a single or a plurality of retro-reflecting objects. Suitably the retro-reflecting object has a plurality of reflecting surfaces at a 90° angle so as to retro-reflect in a wide range of angles of incident radiation.

The landmark may be in the form of a pyramidal retro-reflector having quadrangular base sides of less than 5 millimetres. The small dimensions of the landmark facilitates the pinpointing of the angular position but may reduce the signal obtained. The overall structure permits the landmark to be in a wide range of different attitudes when retro-reflecting.

Preferably the landmark is from 10 to 18 mm at its base sides. Most suitably the landmark is 14 mm wide. An increased landmark size helps to improve the strength of the signal and relatively small detriment of the accuracy of measure.

In commerce, the optical apparatus and landmark parts of system of the invention can be sold separately of one another.

The movable mirror may reciprocate or may be a two-sided flat rotatable mirror. Preferably the movable mirror is a rotatable drum mirror. The mirror has at least six facets to enable a large number of measurements to be made quickly.

Mirror phase signals may be produced in different ways. In a first embodiment an angular movement transducer is connected to the mirror drum for producing the mirror phase signal. This gives potentially a high accuracy even if motor speeds fluctuate. In a second embodiment the mirror drum is rotatable at a substantially constant speed, means are provided for detecting the relfection of radiation from the mirror drum in a predetermined angular position thereof and producing a phase related reference signal and a mirror phase signal is produced by reference to a time lag between the phase related reference signal and the landmark detect signal. The phase related reference signal may be a signal occurring when a scan starts. This gives an accurate mirror phase signal but the reference signal may have to be subjected to mathematical adjustments to accurately indicate the mirror phase.

It is also possible to use a substantially constant speed motor with in addition an angular movement transducer to compensate for small motor speed variations.

The apparatus of the invention can be constructed in a simple manner using fibre-optic components. In one form of construction fibre optic means are provided for conveying outgoing radiation from the radiation generating means to a focal line and for conveying incoming radiation from the same focal line to the means for producing the landmark detect signal. One focal line thus serves for outgoing and incoming radiation, greatly simplifying the optical arrangement. Advantageously the mirror surfaces are planar and a lens is located between the focal line and the mirror to collimate outgoing radiation and focus incoming radiation.

In one alternative construction a silvered mirror or similar beam splitting arrangement could be used so that outgoing and incoming light can be processed by separate devices.

In a preferred arrangement however the fact that the retroreflector relfects light is off-set parallel to the incident light (as a result of successive reflections internally of the retro-reflecting landmark) is used to reflect outgoing and incoming light using different mirror drum facets. A maximum signal can be measured when about half of the radiation leaving the mirror is reflected by a facet so that a substantial part of light is retroreflected for measurement. The outgoing and incoming light can be processed by separate devices, yet good signal to noise ratios may be obtained. The signal builds up and degrades fast up to and from the maximum signal, permitting electronic processing of the measurement. The devices for processing outgoing and incoming light can be designed for optimum performance for their respective functions. Using this system of course multi-facetted drum mirrors have to be used to permit two adjacent facets to reflect incoming and outgoing light.

Using the preferred arrangement incoming and outgoing light can be treated differently so as to give the best measurement position.

As to the outgoing light, this is preferably produced using a fibre-optic slit to provide a narrow beam of light and a circular lens of the Fresnel type to collimate the beam and provide an even light intensity throughout the beam. As to the incoming light, this is preferably focussed by a cylindrical lens to convert the incoming beam into beam focused on a fibre optic slit. The fibre optic arrangement permits the retro-reflected light to be captured at whatever position along the lens the light impinges. The fibre optic arrangement also permits a cross-sectional transformation for Littrow auto-collimation and measurement of varying intensities of light in different parts of the spectrum in the retro-reflected light.

Surprisingly the equipment can be adapted to deal with a considerable number of landmarks simultaneously facilitating the measurement of movement in three dimensions.

The invention in that event utilizes landmarks each having a radiation filtering characteristic so as to reflect only part of an incident spectral range of radiation and preferably an edge filtering characteristic. The apparatus can then distinguish between different landmarks in a preferred form in which the means for passing a beam of radiation includes a source adapted to produce a spectrum of radiation wavelengths for impinging on a plurality of landmarks having specific spectral reflecting characteristics and the means for producing a landmark detect signal include opto-electrical means for discriminating between the reflection of different landmarks. Conveniently a plurality of measuring units (arranged for example to permit measurement of a movement in three dimensions) each receive radiation from a common generating means by fibre-optic means.

The discrimination of incoming radiation can be effected in different but surprisingly convenient ways. Suitably the opto-electrical means include a plurality of filters for inter-acting with incoming radiation and a plurality of sensors associated with each of the filters so as to de-code incoming radiation according to its spectral characteristics and so as to provide a specific landmark detect signal for each of a plurality of landmarks. Preferably the opto-electrical means include a radiation diffraction means for interacting with incoming radiation and a plurality of sensors associated with different bands of the spectrum diffracted so as to de-code incoming radiation according to its spectral characteristics and so as to provide a specific landmark detect signal for each of a plurality of landmarks.

The de-coding can be arranged in a simple way using fibre-optics and analogue summing network conversion of grouped sensor outputs. The retro-reflection characteristics of the landmarks do not give rise in such an arrangement to a unique output at a specified sensor with other sensors "silent" but create a plurality of outputs at a number of sensors. The analogue summing network can be arranged so that only a particular group of sensors create a meaningful signal whereas all other groups of sensors (which may partially overlap with the particular group of sensors) give a non-discriminating signal such as zero. Thus the combined use of retro-reflecting landmarks having edge filter characteristics and analogue summing networks permits the creation of a meaningful signal for each landmark even though the retro-reflection of different landmarks impinges on the same sensors.

The apparatus of the invention can thus be adapted for the measurement of three dimensional movement using simple landmarks not connected to a power supply and in broad daylight avoiding the need for special lighting conditions. The apparatus can be set up easily and can be sold in calibrated condition. The apparatus is of simple construction.

Drawings

Figure 1 is a plan view of a measuring head of an apparatus according to the invention;

Figure 2 is a persepctive part view of the head of Figure 1;

Figure 3 is a schematic diagram of an opto-electrical system associated with the measuring head of Figures 1 and 2;

Figures 4, 5 and 6 are a perspective view, top and side view respectively of a landmark according to the invention;

Figure 7 is a perspective part view of an apparatus according to the invention incorporating three measuring units as illustrated in Figure 1 for 3-D measurement;

Figure 8 is a graph of different spectral reflecting characteristics of different landmarks for use with the apparatus of Figure 7;

Figure 9 is a schematic diagram of the opto-electrical system of the apparatus of Figure 7;

Figure 10 is a schematic diagram of the fibre optics associated with a focal slit of the respective units of the apparatus of Figure 7;

Figure 11 is a schematic diagram of one opto-electrical system for differentiating landmark reflections having different spectral characteristics;

Figure 12 is a schematic diagram of the optical part of another opto-electrical system for differentiating landmark reflections having different spectral characteristics;

Figure 13 is a block diagram of an electrical conversion circuit for differentiating landmark reflections received through the optical arrangement of Figure 12;

Figure 14 is a plan view of another measuring head of an apparatus according to the invention;

Figure 15 is a perspective view of an apparatus according to the invention incorporating three measuring heads as illustrated in Figure 14 for 3-D measurement;

Figure 16A, B, C shows an elevation, plan and perspective view respectively of the electro-optical part for differentiating landmark reflections having different spectral characteristics of the apparatus of Figure 14.

Specific description

Individual measuring unit

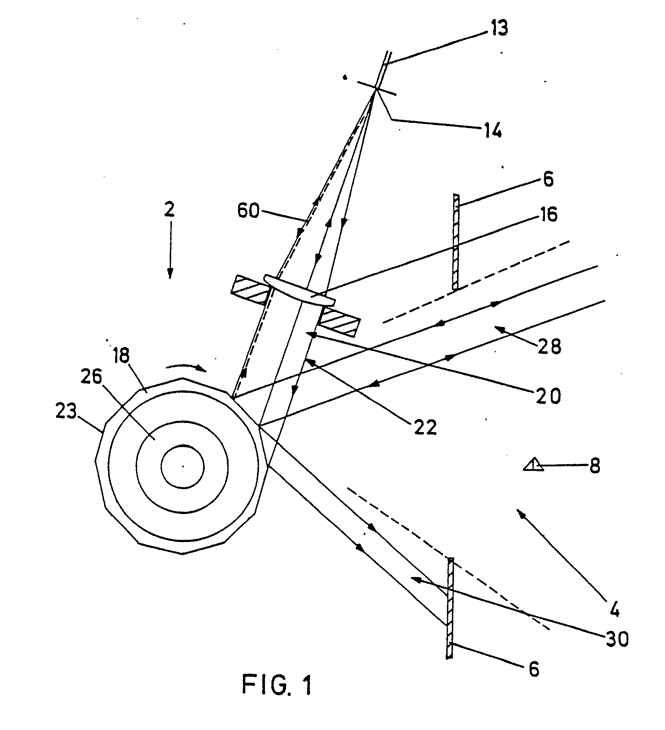

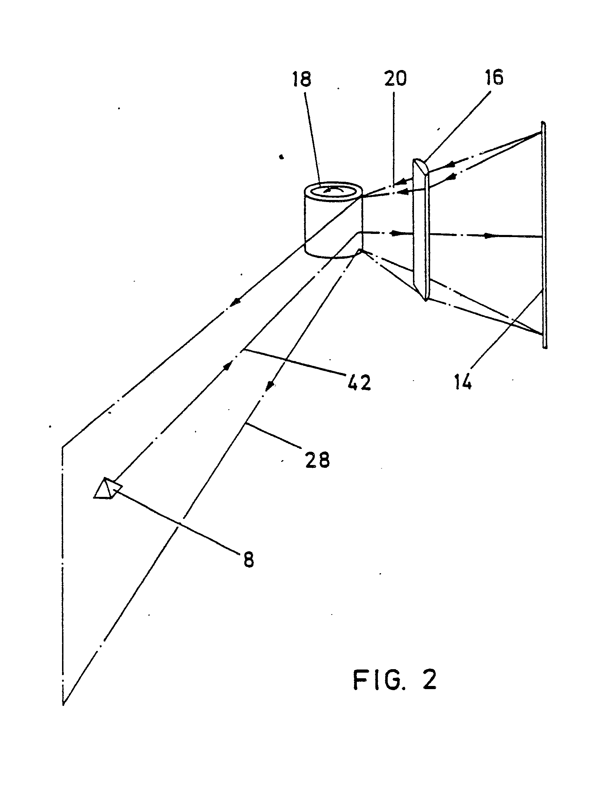

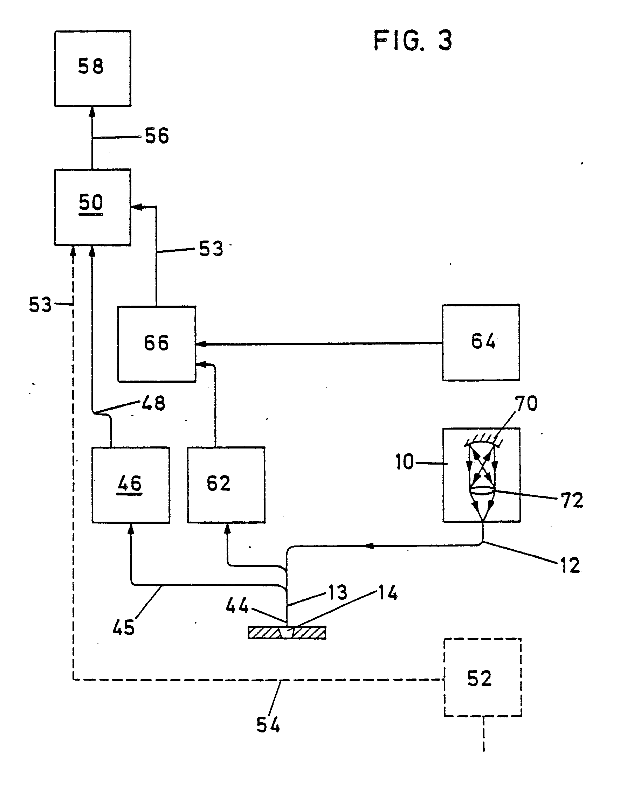

A measuring apparatus incorporating a single measuring unit is illustrated by Figures 1 and 2 which shows the measuring head from a fibre optic slit onwards and by Figure 3 which shows the opto-electrical system up to the slit.

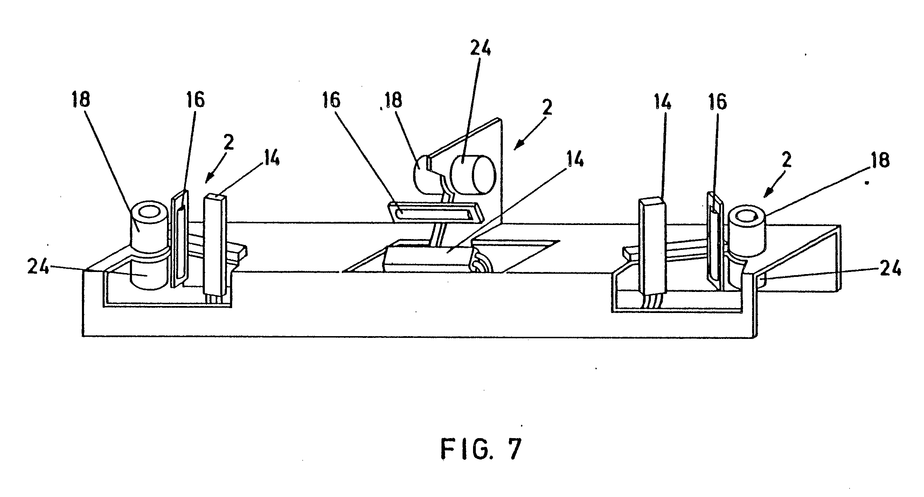

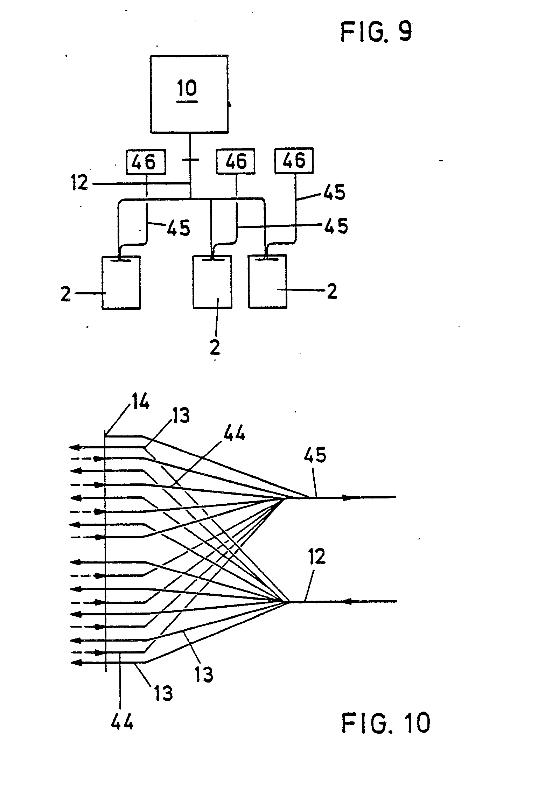

The measuring head 2 scans an observation field 4 between the field limits defined by field stops 6. A landmark 8 is located in the field 4. A means for generating a beam of radiation is in this case in the form of a 15 W to 300 W xenon-arc lamp generally indicated at 10 (Figure 3). The light is focussed by a reflector 70 and a lens 72 for conveying through a fibre optical cable 12. The cable 12 is split (Figure 10) and the individual split cables 13 are located in a fibre optic slit 14 which is 0.15 mm (millimetres) wide and 140 mm high. The xenon-arc lamp should be of appropriate strength for the optical system concerned and could be from 15 to 70 W (Watts) or go up to 300 W or higher. Other sources could be used with a broad band

4

spectrum which is preferred for multiple landmark measurement as explained by reference to Figures 7 to 13. Other broad band sources include tungsten filament lamps. Narrow band sources can be used for single landmark measurements. The xenon-arc radiation include wave lengths of from 300 nm (millimicron) in the ultra-violet range, the range of visible light up to infra-red light of 1000 nm (millimicron). Light from the slit 14 (Figure 1) is collimated by a cylindrical lens 16 so that a beam 20 is defined on its sides by parallel lines 22 approximately 15 millimetres apart. As shown in Figure 2, the beam 20 is fan-shaped when seen sideways. The lens 16 may alternatively be a two or three element compound lens system to reduce optical aberrations such as spherical aberration, chromatic aberration or astigmatism.

The beam 20 is incident on an aluminium mirror drum 18 constituting a moving mirror having twelve optically flat sides or facets 23. The drum 18 is rotated at a substantially constant speed of 1500 r.p.m. by a synchronous motor 24 having a shaft keyed to a central hub portion 26 of the drum 18. The sides 23 are approximately 12 millimetres wide so that the beams 20 is split into two. The screening elements 6 permit one beam 28 to scan the field 4 whereas the other beam 30 is screened out before becoming effective. Only one beam from the drum 18 ever scans the field 4. Thus 300 scans per second are produced through the field 4.

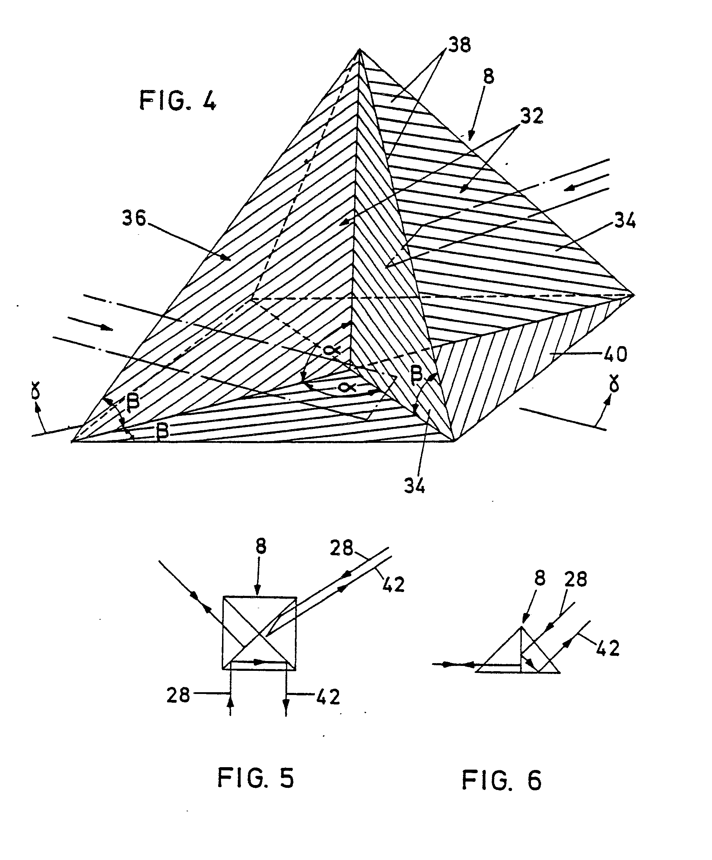

The landmark 8, in the form of a pyramidal retro-reflector (see Figures 4 to 6), is made up out of four individual prisms 32. Each prism has three adjacent triangular side faces 34. Each side face has one 90° angle $\alpha$ and two 45° angles $\beta$ and is treated to make it reflective. The remaining fourth side face 36 is an equilateral triangle and is transparent. The reflective side faces 34 are brought together so as to provide a reflective base plane 40 and two reflective planes 38 passing through the diagonals of the base plane 40. All reflective surfaces 38 and 40 are at a 90° angle. The result is that the landmarks act as a retro-reflector because it reflects light in the same direction as the light incident upon it through an arc $\gamma$ of about 200 degrees. Figure 5 illustrates retro-reflection of light involving the two diagonal planes 38. Figure 6 illustrates retro-reflection of light involving the base plane 40 and one diagonal plane 38. Collimation of light is maintained after retro-reflection. Please note that any retro-reflected causes a slight sideways shift of the incident and reflected light although the direction does not change. The sides of the base plane 40 of the pyramid formed are only 3 millimetres (mm) long so as to enable its movement to be accurately measured. For certain long range measurements the base plane sides may be in excess of 5 mm.

In use as the beam 28 scans the field 4, the landmark 8 will retro-reflect light 42 (see Figure 2) in the same direction as it arrives but only when the outgoing beam 28 is incident upon the landmark. The retro-reflected light 42 returns approximately by the same path and arrives at the slit 14. The retro-reflected light 42 is conveyed (see Figure 3) through a series of fibre optic cables 44 evenly distributed along the slit 14 (see Figure 10). The cables 44 are then combined and passed to a photosensor 46 by a single cable 45. The sensor 46 produces a landmark detect signal 48. This signal is an input to circuitry 50 for producing a signal 56 related to the angular position of the landmark 8 in the field 4. The retro-reflected light can reach the slit 14 at different heightwise positions depending on the heightwise position of the landmark 8 in the beam 28. Whatever the height of the landmark 8, the landmark detect signal is the same and related solely to the angular position of the landmark 8 in the field 4.

It is to be noted that the retro-reflection can occur at all angular positions of the landmark 8 in the field 4 and the landmark detect signal *cannot*, on its own, provide any indication of the landmark position. To determine the landmark position it is necessary to relate retro-reflection to the angle of the beams 28 and 42 or the phase of movement of the mirror. This can be done for example in two ways.

In a first embodiment, an angular movement transducer 52 is coupled to the motor 24 so as to provide a series of successive signals 53 each specific to a particular angle of the flat sides 23 on which the beam 20 is incident. A signal 54 related to the phase of movement of the mirror drum can be then supplied to the circuitry 50 so as to provide an output signal 56 related to a particular angular position of the landmark 8. The signal 56 can be recorded and/or displayed at 58 by appropriate equipment.

In a second embodiment, the items in dotted lines in Figure 3 are omitted. A phase related signal is produced as follows. At one particular angle, each flat side 23 reflects directly to the slit 14 as shown by line 60 in Figure 1. The reflected light can be detected and so provides a reference signal at 62 indicative of a particular drum position. At the same time a high frequency clock pulse signal is generated at 64. The reference signals and clock pulse signals are compared at 66 to provide a series of successive signals 53 each related to a particular drum rotational angle, as the drum rotates at a constant known speed.

Other expedients for providing a signal related to the angle beam 28 at the moment of retro-reflection by the landmark 8 can also be used.

Using the apparatus the landmark angle can be accurately and quickly determined. The measurement can be effected using relatively few components as the incoming and outgoing light follow substantially the same path. Once manufactured, few calibration problems should arise. It is not necessary to use LED's as landmarks.

Multiple measuring units

With references to Figures 7 and 9, the three measured heads 2 can be combined to provide measurement of landmark movement in three dimension in a manner the same as the CODA apparatus. In most uses which involve composite movements, and movements in three dimension, it is desirable to measure the movement of a number of landmarks.

The xenon-arc lamp 10 (Figure 3) produces a collimated beam of light for passing through the cable 12. The light is then split and conveyed to each of the measuring heads 2 where the light is evenly emitted along the slit 14 by the cables 13 as previously described.

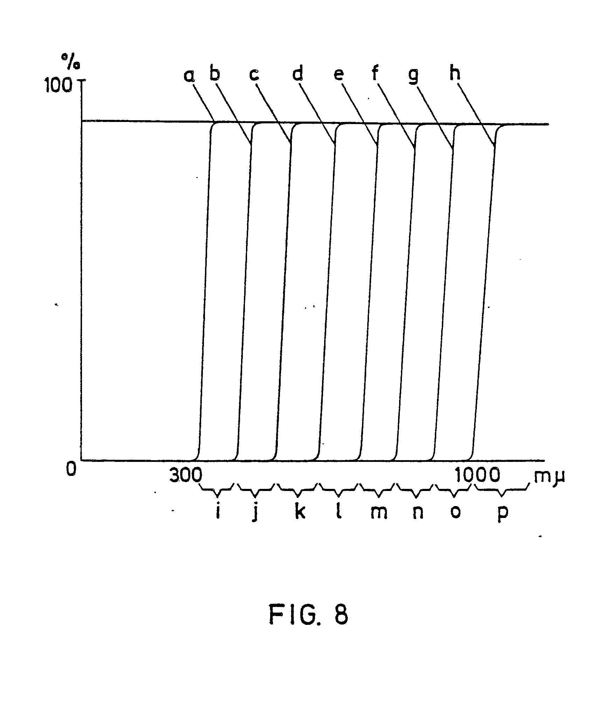

The landmarks 8 each have different spectral reflecting characteristics by covering their transparent surfaces with appropriate edge filter materials such as gelatin Wratten edge filter produced by Kodak or by making them from doped glass such as Schott colour glass. Figure 8 shows that a large number (eight) of different characteristics can be provided but the different transmission spectra overlap at the red end of the spectrum. The different characteristics have been indicated by a to h. The portions between successive edges have been indicated by i to p.

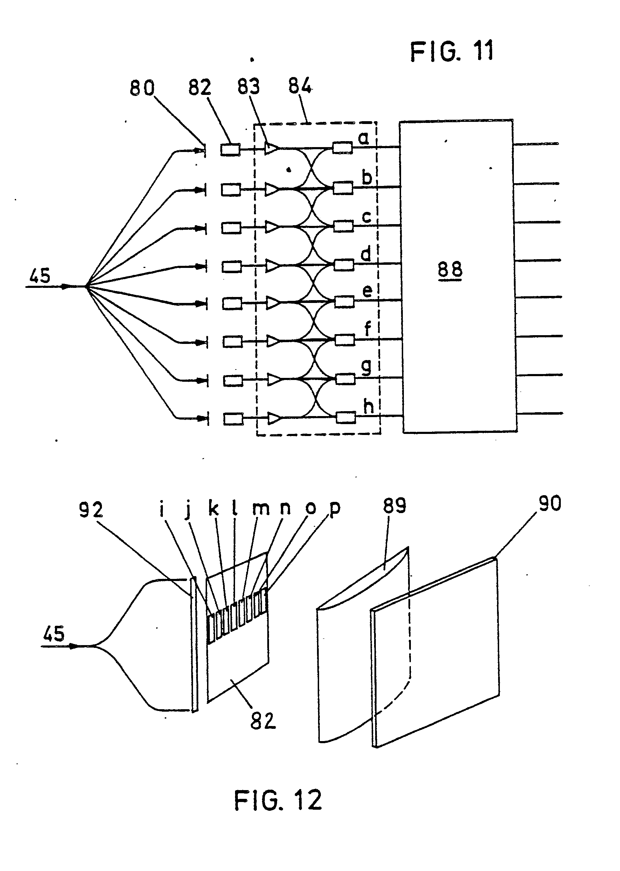

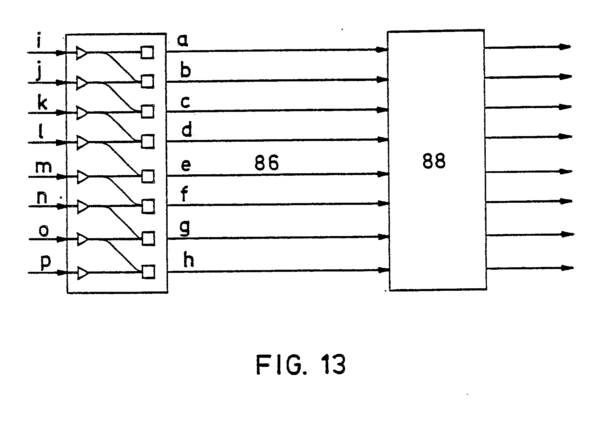

The incoming landmark detect signals passing through cables 44 are all led through the cable 45 to opto-electrical systems for de-coding and differentiating incoming reflections. Because the reflecting characteristics of the landmark overlap, a number of photosensors 82 have to be arranged to sense a unique part of the incoming light. Outputs from the photosensors are supplied to an analogue summing network 84 in which the photosensor signals are analysed to provide landmark detect signals specific to a particular landmark. The specific landmark detect signals (marked a to h in Figures 11 and 13) are then supplied to a band pass filter 88 for 20 to 40 kHz to eliminate the effect to noise and spurious reflections.

The incoming landmark detect signals can be analysed and de-coded in two ways illustrated in Figure 11 and in Figures 12 and 13.

With reference to Figure 11, the light from the cable 45 is split and conveyed to eight gelatine edge filters 80 having a spectral transmission characteristic a to h as illustrated in Figure 8 and corresponding to the landmark characteristics. From the filters the light passes to the photosensors 82 whose outputs are amplified to the level shown in Table 1. This is effected by adjusting amplifiers 83 so that the difference in the energy of light transmitted by adjacent edge filters becomes a constant value E. The last filter 80 having filter characteristic h cannot be set in this way and is set to have a total energy $C \times E$, C being larger than 1. The energy sensed by the sensors 82 and the resulting outputs very considerably depending on the particular landmark reflection and filter transmission characteristics. The number of sensors 82 receiving radiation also varies. Nevertheless the analogue conversion ensures that output signals 86 are specific to a particular landmark and of similar magnitude.

TABLE 1

| Input | | Analogue summing network conversion at 84 | Output | | | | | | | |
|---|---|---|---|---|---|---|---|---|---|---|
| Transmission characteristics filters 80 (letters refer to spectral characteristics as illustrated in Figure 8) | Amplifiers set to give indicated response to unfiltered light from sensors 82 | | Resulting from following landmark characteristics (letters refer to spectral characteristics as illustrated in Figure 8) | | | | | | | |
| | | | a | b | c | d | e | f | g | h |
| a | 7E+CE | a−b | E | O | O | O | O | O | O | O |
| b | 6E+CE | b−½(a+c) | O | ½E | O | O | O | O | O | O |
| c | 5E+CE | c−½(b+d) | O | O | ½E | O | O | O | O | O |
| d | 4E+CE | d−½(c+e) | O | O | O | ½E | O | O | O | O |
| e | 3E+CE | e−½(d+f) | O | O | O | O | ½E | O | O | O |
| f | 2E+CE | f −½(e+g) | O | O | O | O | O | ½E | O | O |
| g | E+CE | g−½(f+h) | O | O | O | O | O | O | ½E | O |
| h | CE | h−kg | O | O | O | O | O | O | O | $\dfrac{CE}{1+C}$ |
| | | $(k = \dfrac{C}{1+C})$ | | | | | | | | |

For example if landmark a of the landmarks 8 retro-reflects, sensor 82 behind filter 80 having characteristic d receives: 4E+CE

Sensor 82 behind filter 80 having characteristic e receives: 3E+CE

Sensor 82 behind filter 80 having characteristic f receives: 2E+CE

Analogue conversion for the output opposite the sensor 80 behind a filter with characteristic e gives

$$e-\tfrac{1}{2}(d+f)=[3E+CE]-\tfrac{1}{2}[(4E+CE)+(2E+CE)]=O$$

Similarly other outputs opposite sensors behind filters with characteristics b, c, d, f, g, h will be zero even though radiation is received by all sensors 82 in this case.

Only the output opposite the sensor with filter a will produce a signal:

$$a-b=(7E+CE)-(6E+CE)=E$$

Similarly the output opposite the sensor with filter e will respond only to retro-reflection by the landmark with characteristic e as follows:

$$e-\tfrac{1}{2}(d+f)=(3E+CE)-\tfrac{1}{2}[(3E+CE)+(2E+CE)]=\tfrac{1}{2}E$$

Even in more complicated circumstances, where say two landmarks retroreflect at the same time, two outputs will be produced specific to each landmark. The presence of other light source near a retroreflecting landmark (such as room lights, windows) has no effect. Care must be taken to exclude radiation with sharply defined spectra which could interfere with a satisfactory operation.

Filters 80, sensors 82, network 84 and filter 88 occupy the position of the sensor 46 in Figure 3. The overall lay-out is otherwise the same.

With reference to Figures 12 and 13, the light from cable 45 is passed to slit 92. A Littrov auto-collimation configuration uses a spherical lens 89 and a reflecting type diffraction grating 90 to split up the incoming spectra. The split light is reflected through the lens 89 and can be sensed by sensors 82 lying in the same plane as the slit 92. Depending on the wavelength of the reflected light, the light impinges on eight photosensors 82 marked i to p in Figure 12; i to p corresponding to the portions marked in Figure 8. The photosensor output is amplified at 83 as previously. An analogue conversion is then effected by the network 84 as illustrated in Table 2.

TABLE 2

| Input | | Analogue summing network conversion at 84 | Output | | | | | | | |
|---|---|---|---|---|---|---|---|---|---|---|
| Spectral range diffracted (letters refer to spectral characteristics as illustrated in Figure 8) | Amplifiers set to give indicated response to unfiltered light from sensors 82 | | Resulting from following landmark characteristics (letters refer to spectral characteristics as illustrated in Figure 8) | | | | | | | |
| | | | a | b | c | d | e | f | g | h |
| i | E | i | E | O | O | O | O | O | O | O |
| j | E | j−i | O | E | O | O | O | O | O | O |
| k | E | k−j | O | O | E | O | O | O | O | O |
| l | E | l−k | O | O | O | E | O | O | O | O |
| m | E | m−l | O | O | O | O | E | O | O | O |
| n | E | n−m | O | O | O | O | O | E | O | O |
| o | E | o−n | O | O | O | O | O | O | E | O |
| p | E | p−o | O | O | O | O | O | O | O | E |

Again, the analogue conversion ensures that the channel, which includes sensor 82 receiving spectral portion i, only gives an output when landmark with reflecting characteristic a retroreflects. All other landmark retroreflection gives a zero output at that channel.

7

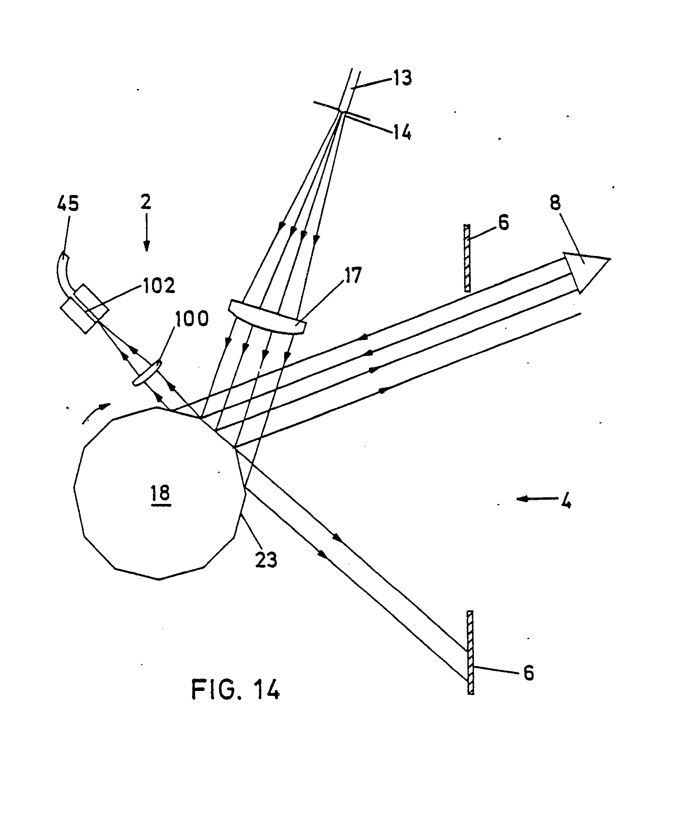

Individual measuring unit (Figures 14 to 16)

Figure 14 shows the fibre optic cable 12 supplying radiation from a source which radiation is collimated by a Fresnel lens 17 to provide a narrow beam of radiation with diverging and lower margins. The aluminium mirror drum 18 has one facet 23 at any one time which scans the observation field 4 containing the landmark 8.

Incident radiation is reflected at an angle from the facet 23. At one angular drum position the reflected radiation is reflected by the landmark. Due to the fact, noted previously, that the landmark reflects incident and reflected light parallelly as some radiation is off-set sideways by successive reflections internally of the landmark 8, some of the sideways off-set radiation thus impinges upon the next facet 23 coming up due to mirror drum rotation. The radiation reflected from this later facet is focussed by a plano-convex cylindrical lens 100 and passes to a further fibre optic slit 102. The retro-reflected light can then be treated in the same way as the light passing through the aforementioned cables 45.

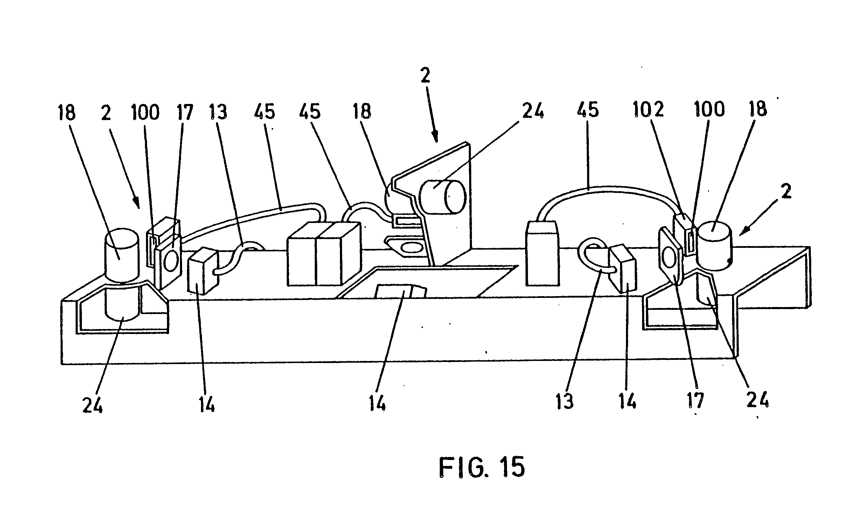

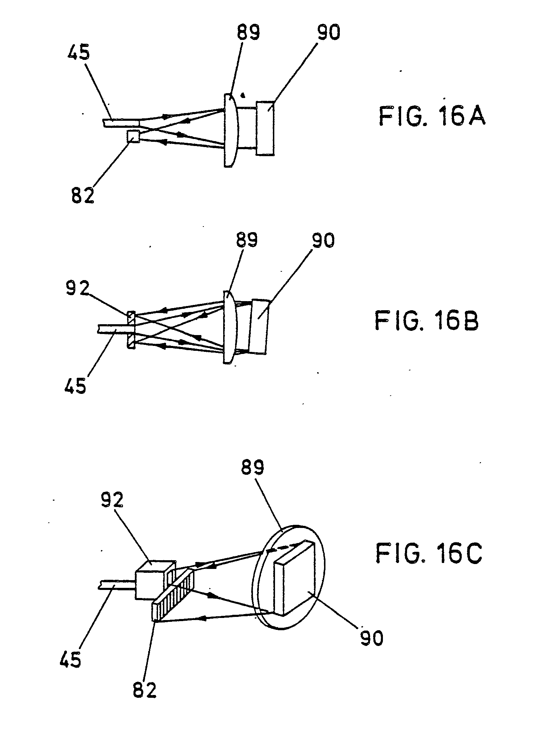

Figure 15 shows a 3-D measuring arrangement with a particular Littrow auto-collimation arrangement of the general type also shown in Figure 12. The details of the present arrangement are illustrated in Figures 16A, B,C and show the use of a concentrated beam of light to provide a spread out, spectrally divided return beam of light onto a photodiode, preferably a Centronics LD-20-5T device. The diffraction grating of PTR optics 600 lines per mm blased for 400 nm (4000 Å) cooperates with a Fresnel autocollimation lens (f=50 mm, diameter of 50 mm).

**Claims**

1. A movement measuring system using a beam (20) of electromagnetic radiation with different spectral components which is reflected by a rotating mirror (18) to scan an observation field (4) containing a plurality of retro-reflecting landmarks (8), each of which filters incident radiation differently from the others, and using an arrangement responsive to the retro-reflection of different spectral components to produce a signal specific to the landmarks (8) characterised in that the beam (20) has a broad-band spectrum and the landmarks (8) have filtering characteristics retro-reflecting a spectral range delimited by an edge where the filter transmission ratio changes over a narrow spectral range, the characteristics of the landmarks (8) being differently delimited but having mutually overlapping spectral ranges and in that sensors (82) are provided each receptive to a different spectral range which range is delimited by spectral ranges corresponding to the edges delimiting the spectral transmission of the landmarks (8) and an electronic conversion network (84) combining in groups, the outputs of the respective sensors (82) to provide a single signal specific for a particular one of the landmarks (8) when that landmark (8) retro-reflects the filtered broad-band radiation with the appropriate delimited spectral range onto the sensors (82) to thereby determine the angular portion of that particular landmark (8) in the observation field (4) by reference to the phase of mirror rotation at the time said single signal is provided.

2. A system according to claim 1 in which the landmark (8) is a pyramidal retro-reflector having a quadrangular base.

3. A system according to claim 1 or claim 2 in which the rotatable mirror (18) is rotated at a substantially constant speed and means (62, 64) are provided for detecting the radiation reflected at a predetermined angular position and so producing a reference signal (53) related to the phase of mirror rotation and a signal indicative of the landmark position (56) is produced by reference to the time lag between the phase related reference signal (53) and said single signal (48).

4. A system according to any of the preceding claims 1 to 3 in which first fibre optic means (12, 13) are provided for conveying outgoing radiation from a radiation generating means (10) along the length of a narrow slit (14) parallel to the axis of rotation of the mirror (18) to provide the beam of radiation and a lens (16) is located between the focal line and the mirror (18) to collimate the outgoing radiation and second fibre optic means (44) are provided interspersed with the first fibre optic means (12, 13) along the length of the slit (14) for conveying the retro-reflected radiation focussed by the same lens (16) to the sensors (82).

5. A system according to any of the preceding claims 1 to 3 in which first fibre optic means (13) are provided for conveying radiation from a radiation generating means (10) along the length of a first narrow slit parallel (14) to the axis of rotation of the mirror (18) to provide the beam of radiation and a first lens (17) is located between the first slit (14) and the mirror (18) to collimate the outgoing radiation and second fibre optic means (45) are provided leading from a second narrow slit (102) parallel to the axis of rotation of the mirror (18) for conveying the retro-reflected radiation focussed by a second lens (100) to the sensors (82), the mutual angle of reflecting mirror surfaces (23) and the angle between the first and second slits (14, 102) being arranged so that the outgoing radiation from the first slit (14) reflected by one surface (23) of the mirror (18) is retro-reflected via another surface (23) of the mirror (18) to the second slit (102).

6. A system according to claim 4 or claim 5 in which three rotatable drum mirrors (18) are arranged so that one pair scans for landmarks (8) to produce a signal indicative of the landmark position with respect to a plane and a third one scans for landmarks (8) at right angles to said pair to produce a signal indicative of the landmark position in a third dimension, each unit receiving the broad band spectrum radiation from the radiation generating means (10) through fibre-optic means (12, 13).

7. A system according to any of claims 1 to 6 in which the incoming retro-reflected radiation is split up and parts thereof, with the same spectral characteristics as each other and the incoming radiation, are arranged to pass through a plurality of filters (80) and the sensors (82) measure the overall intensity of the split up radiation, the filters (80) each having filtering characteristics with a tarnsmission spectrum delimited by an edge but with the transmitted spectral ranges overlapping in a manner corresponding to the characteristics of the landmarks (8).

8. A system according to any of claims 1 to 6 in which the incoming retro-reflected radiation is led to a radiation diffraction means (89, 90) to split it up and parts thereof, each with distinct non-overlapping spectral ranges, delimited by an edge corresponding to the edges formed by the transmission spectra of the landmarks (8), are arranged to impinge on the sensors (82) to measure the intensity of the respective parts.

**Patentansprüche**

1. Bewegungsmeßsystem, das einen Strahl (20) elektromagnetischer Strahlung mit verschiedenen spektralen Komponenten, der von einem rotierenden Spiegel (18) reflektiert wird, um ein Beobachtungsfeld (4) abzutasten, das eine Mehrzahl von zurückreflektierenden Ortungsmarken (8) enthält, von denen jede einfallende Strahlung anders filtert, sowie eine Anordnung benutzt, die die Reflexion von verschiedenen spektralen Komponenten erkennt und ein für die Ortungsmarken (8) spezifisches Signal erzeugt, dadurch gekennzeichnet, daß der Strahl (20) ein Breitbandspektrum aufweist und die Ortungsmarken (8) mit Filtercharakteristiken versehen sind, durch die ein durch eine Kante, in der sich der Filterdurchlaßfaktor über einem schmalen Spektralbereich ändert, begrenzter Spektralbereich reflektiert wird, wobei die Charakteristiken der Ortungsmarken (8) verschieden begrenzt sind, jedoch gegenseitig überlappende Spektralbereiche aufweisen, daß Sensoren (82) vorgesehen sind, die jeweils auf den Empfang eines verschiedenen Spektralbereichs eingestellt sind, der durch Spektralbereiche begrenzt ist, die mit den Kanten korrespondieren, die die spektrale Transmission der Ortungsmarken (8) begrenzen, und daß ein elektronisches Wandlernetzwerk (84) vorgesehen ist, das gruppenweise die Ausgangssignale der betreffenden Sensoren (82) kombiniert, um ein einzelnes Signal zu erzeugen, das spezifisch für eine bestimmte Ortungsmarke (8) ist, wenn diese Ortungsmarke (8) die gefilterte Breitbandstrahlung mit dem geeigneten begrenzten Spektralbereich auf die Sensoren (82) reflektiert, um dabei die Winkelstellung dieser betreffenden Ortungsmarke (8) im Beobachtungsfled (4) unter Verwendung der Phase der Spiegelrotation zu der Zeit, in der das einzelne Signal erzeugt wird, zu bestimmen.

2. System nach Anspruch 1, in dem die Ortungsmarke (8) ein pyramidischer Reflektor mit einer rechteckigen Grundfläche ist.

3. System nach Anspruch 1 oder 2, in dem der drehbare Spiegel (18) mit einer im wesentlichen konstanten Geschwindigkeit gedreht wird und Mittel (62, 964) vorgesehen sind zur Detektion der an einer vorbestimmten Winkelposition reflektierten Strahlung und zur Erzeugung eines Referenzsignals (53), das auf die Phase der Spiegelrotation bezogen ist, wobei ein die Ortungsmarkenposition (56) charakterisierendes Signal durch Bezugnahme auf die Zeitverzögerung zwischen dem auf die Phase bezogenen Referenzsignal (53) und dem einzelnen Signal (48) erzeugt wird.

4. System nach einem der vorstehenden Ansprüche 1 bis 3, in dem eine Faseroptikanordnung (12, 13) vorgesehen ist zur Leitung der Ausgangsstrahlung von einem Strahlungsgenerator (10) über die Länge eines engen Schlitzes (14) parallel zur Rotationsachse des Spiegels (18), um einen Strahl zu erzeugen, und in dem eine Linse (16) zwischen der Fokuslinie und dem Spiegel (18) zur Kollimation der ausgesandten Strahlung angeordnet ist, und in dem eine zweite Faseroptikanordnung (44) verschachtelt mit der ersten Faseroptikanordnung (12, 13) über die Länge des Schlitzes (14) zum Transport der reflektierten Strahlung angeordnet ist, die durch dieselbe Linse (16) auf die Sensoren (82) fokussiert ist.

5. System nach einem der vorstehenden Ansprüche 1 bis 3, in dem eine erste Faseroptikanordnung (13) vorgesehen ist zur Leitung der Ausgangstrahlung von einem Strahlungsgenerator (10) über die Länge eines engen Schlitzes (14) parallel zur Rotationsachse des Spiegels (18), um einen Strahl zu erzeugen und in dem eine Linse (16) zwischen der Fokuslinie und dem Spiegel (18) zur Kollimation der ausgesandten Strahlung angeordnet ist und in dem eine zweite Faseroptikanordnung (45) vorgesehen ist, die von einem zweiten engen Schlitz (102) parallel zur Rotationsachse des Spiegels verläuft, um von einer zweiten Linse (100) fokussierte reflektierte Strahlung zu den Sensoren (82) zu leiten, wobei die jeweiligen Winkel zwischen den reflektierenden Spiegeloberflächen (23) und der Winkel zwischen dem ersten und dem zweiten Schlitz (14, 102) so angeordnet sind, daß die von dem ersten Schlitz (14) ausgesandte Strahlung, die von einer Oberfläche (23) des Spiegels (18) reflektiert wird, über eine weitere Oberfläche (23) des Spiegels zum zweiten Schlitz (102) zurückreflektiert wird.

6. System nach Anspruch 4 oder 5, in dem drei rotierende Spiegeltrommeln (18) so angeordnet sind, daß ein Paar Ortungsmarken (8) abtastet, um ein Signal zu produzieren, das charakteristisch für die Ortungsmarkenposition bezüglich einer Ebene ist und daß eine dritte Trommel (18) die Ortungsmarken (8) in rechten Winkeln zu dem genannten Paar abtastet, um ein Signal zu erzeugen, das für die Ortungsmarkenpositionen einer dritten Dimension charakteristisch ist, wobei jede Einheit die breitbandige Strahlung von dem Strahlungsgenerator (10) durch die Faseroptikanordnungen (12, 13) erhält.

7. System nach einem der Ansprüche 1 bis 6, in dem die ankommende reflektierte Strahlung aufgespalten wird und Teile davon, mit untereinander den-selben spektralen Charakteristiken und mit derselben spektralen Charakteristik wie die ankommende Strahlung, so ausgerichtet sind, daß sie durch eine Mehrzahl von Filtern (80) laufen, wobei die Sensoren (82) die Gesamtintensität der aufgespaltenen Strahlung messen und die Filter (80) jeweils eine Filtercharakteristik mit einem Transmissionsspektrum aufweisen, das durch eine Kante begrenzt ist, wobei jedoch die durchgelassenen Spektralbereiche in einer Weise überlappen, die mit den Charakteristiken der Ortungsmarken (8) korrespondieren.

8. System nach einem der Ansprüche 1 bis 6, in dem die ankommende reflektierte Strahlung durch eine Strahlungsablenkungsanordnung (89, 90) geleitet wird, um sie aufzuspalten, wobei Teile davon, jeder mit verschiedenen, nicht überlappenden Spektralbereichen, die durch eine mit den durch die Transmissionsspektren der Ortungsmarken (8) gebildeten Kanten korrespondierenden Kante begrenzt sind, so angeordnet sind, daß sie auf die Sensoren (82) auftreffen, die die Intensität der betreffenden Teile messen.

**Revendications**

1. Système de mesure de mouvement utilisant un faisceau (20) de rayonnement électromagnétique avec différentes composantes spectrales, qui est réfléchi par un miroir tournant (18) de façon à balayer un champ d'observation (4) contenant un ensemble de points de repère (8) rétro-réfléchissants, dont chacun filtre le rayonnement incident de manière différente des autrs, et utilisant un dispositif réagissant à la rétro-réflexion de différentes composantes spectrales pour produire un signal spécifique aux points de repère (8), système caractérisé en ce que le faisceau (20) présente un spectre à large bande et que les points de repère (8) présentent des caractéristiques de filtration qui rétro-réfléchissent une plage spectrale délimitée par un bord où le rapport de transmission de filtre varie sur une plage spectrale étroite, les caractéristiques des points de repère (8) étant délimitées différemment mais ayant des plages spectrales qui se recouvrent mutuellement, et en ce que des capteurs (82) sont prévus, chacun réagissant à une plage spectrale différente, cette plage étant délimitée par des plages spectrales correspondant à des bords délimitant la transmission spectrale des points de repère (8) et un réseau de conversion électronique (84) combinant en groupes les signaux de sortie des capteurs respectifs (82) de façon à produire un signal unique spécifique d'un des points de repère (8) défini lorsque ce point de repère (8) rétro-réfléchit le rayonnement à large bande filtré avec la plage spectrale délimitée appropriée vers les capteurs (82), afin de déterminer ainsi la position angulaire de ce point de repère défini (8) dans le champ d'observation (4) par référence à la phase de rotation du miroir au moment où le signal unique est produit.

2. Système selon la revendication 1, caractérisé en ce que le point de repère (8) est un réro-réflecteur pyramidal ayant une base quadrangulaire.

3. Système selon la revendication 1 ou 2, caractérisé en ce que le miroir rotatif (18) tourne à une vitesse pratiquement constante et qu'il est prévu des moyens (62, 64) pour détecter le rayonnement réfléchi à une position angulaire prédéterminée et produire ainsi un signal de référence (53) lié à la phase de rotation du miroir, et un signal indiquant la position (56) du point de repère est produit en se référant au décalage temporel entre le signal de référence (53) lié à la phase et le signal unique (48).

4. Système selon l'une quelconque des revendications 1 à 3 précédentes, caractérisé en ce que de premiers moyens à fibres optiques (12, 13) sont prévus pour transporter le rayonnement sortant d'un moyen de production de rayonnement (10) suivant la longueur d'une fente mince (14) parallèle à l'axe de rotation du miroir (18) afin de produire le faisceau de rayonnement et une lentille (16) est disposée entre la ligne focale et le miroir (18) afin de collimater le rayonnement sortant, et que de seconds moyens à fibres optiques (44) sont prévus entremêlés avec les premiers moyens à fibres optiques (12, 13) le long de la fente (14) afin de transporter le rayonnement rétro-réfléchi, focalisé par la même lentille (16), aux capteurs (82).

5. Système selon l'une quelconque des revendications 1 à 3 précédentes, caractérisé en ce que de premiers moyens à fibres optiques (13) sont prévus pour transporter le rayonnement provenant d'une source de rayonnement (10) le long d'une première fente étroite (14) parallèle à l'axe de rotation du miroir (18) afin de produire le faisceau de rayonnement, et une première lentille (17) est disposée entre la première fente (14) et le miroir (18) pour collimater le rayonnement sortant, et que de seconds moyens à fibres optiques (45) sont prévus, conduisant d'une deuxième fente étroite (102) parallèle à l'axe de rotation du miroir (18), pour transporter le rayonnement rétro-réfléchi focalisé par une deuxième lentille (100), aux capteurs (82), l'angle mutuel des surfaces de miroir réfléchissantes (23) et l'angle entre les première et deuxième fentes (14, 102) étant déterminés de façon que le rayonnement sortant de la première fente (14), réfléchi par une surface (23) du miroir (18), soit rétro-réfléchi au moyen d'une autre surface (23) du miroir (18) vers la deuxième fente (102).

6. Système selon la revendication 4 ou 5, caractérisé en ce que trois miroirs cylindriques rotatifs (18) sont disposés de façon qu'une paire balaye des points repères (8) pour produire un signal indiquant la position du point de repère par rapport à un plan et qu'un troisième balaye des points de repère (8) à angles droits par rapport à la paire de moiroirs, afin de produire un signal indiquant la position du point de repère dans une troisième dimension, chaque unité recevant le rayonnement de spectre à bande large au moyen de production de rayonnement (10) à travers des moyens à fibres optiques (12, 13).

7. Système selon l'une quelconque des revendications 1 à 6, caractérisé en ce que le rayonnement rétro-réfléchi incident est décomposé et que des parties de ce rayonnement, ayant les mêmes caractéristiques spectrales que les autres parties et le rayonnement incident, sont amenées à traverser un ensemble de filtres (80), et les capteurs (82) mesurent l'intensité totale du rayonnement décomposé, les filtres (80) ayant chacun des caractéristiques de filtration avec un spectre de transmission délimité par un

**0 062 642**

bord mais avec les plages spectrales transmises se recouvrant d'une manière correspondante aux caractéristiques des points de repère (8).

8. Système selon l'une quelconque des revendications 1 à 6, caractérisé en ce que le rayonnement rétro-réfléchi incident est conduit à un moyen de diffraction du rayonnement (89, 90) afin d'être décomposé et que des parties de ce rayonnement, chacune avec des plages spectrales distinctes ne se recouvrant pas, délimitées par un bord correspondant aux bords formés par le spectre de transmission des points de repère (8), sont amenées à frapper les capteurs (82) de façon à permettre la mesure de l'intensité des parties considérées.

11

0 062 642

FIG. 1

FIG. 2

FIG. 3

0 062 642

3

FIG. 4

FIG. 5

FIG. 6

4

FIG. 7

0 062 642

FIG. 8

FIG. 9

FIG. 10

FIG. 11

FIG. 12

FIG. 13

FIG. 14

FIG. 15

FIG. 16A

FIG. 16B

FIG. 16C